# FASCICULE DE BREVET EUROPEEN

(11) **EP 3 120 050 B1**
(45) Date de publication et mention de la délivrance du brevet: **02.05.2018**
(21) Numéro de dépôt: 15709530.8
(22) Date de dépôt: 11.02.2015
(51) Int. Cl.: F16H 61/12, F16H 61/28

(54) **PROCÉDÉ ET DISPOSITIF DE CONTRÔLE DES DÉPLACEMENTS DES FOURCHETTES D'UNE BOÎTE DE VITESSES ROBOTISÉE, PAR RÉAPPRENTISSAGE**
VERFAHREN UND VORRICHTUNG ZUR ÜBERWACHUNG DER BEWEGUNGEN DER GABELN EINES ROBOTERGETRIEBES DURCH UMLERNEN
METHOD AND DEVICE FOR MONITORING THE MOVEMENTS OF THE FORKS OF A ROBOTIZED GEARBOX, BY RELEARNING

(30) Priorité: 19.03.2014 FR 1452295
(43) Date de publication de la demande: 25.01.2017
(73) Titulaire: PSA Automobiles SA, 78300 Poissy (FR)
(72) Inventeur: SCHAEFFER, Eric, F-75013 Paris (FR)
(86) Numéro de dépôt international: PCT/FR2015/050337
(87) Numéro de publication internationale: WO 2015/140430

(56) Documents cités:
- EP-A2- 1 055 847
- DE-A1- 10 201 981
- DE-A1-102011 006 560
- FR-A1- 2 849 129

## Description

L'invention concerne les boîtes de vitesses robotisées qui équipent certains systèmes, comme par exemple certains véhicules, éventuellement de type automobile, et plus précisément le contrôle des positions des fourchettes de telles boîtes de vitesses, tel que connu de DE 102 01 981, divulguant les caractéristiques du préambule des revendications 1 et 3. Comme le sait l'homme de l'art, une boîte de vitesses robotisée comprend généralement au moins un arbre primaire, au moins un arbre secondaire, au moins un actionneur, au moins un synchroniseur et au moins une fourchette.

Chaque arbre primaire et l'arbre secondaire associé sont munis respectivement de pignons fixes et de pignons fous destinés à définir ensemble des rapports (ou vitesses).

Chaque actionneur est chargé d'induire le déplacement d'au moins un pignon fou de l'arbre secondaire pour l'engrener avec un pignon fixe de l'arbre primaire.

Chaque synchroniseur est solidarisé en rotation à un arbre secondaire, tout en pouvant se translater sur ce dernier pour être couplé à un pignon fou monté à rotation libre sur son arbre secondaire, lors d'une phase dite de synchronisation. Par exemple, chaque synchroniseur peut comprendre au moins :
- un moyeu solidarisé en rotation à l'arbre secondaire grâce à des cannelures,
- un manchon (ou crabot) monté en translation sur le moyeu,
- une bague de synchronisation comprenant une partie conique femelle propre à être couplée à une partie conique mâle d'un pignon fou, et
- un mécanisme d'armement installé entre une face interne du manchon et une face externe du moyeu, et destiné à translater la bague de synchronisation pour la coupler au pignon fou lorsque le manchon (ou crabot) est translaté par la fourchette associée.

Chaque manchon est propre à être translaté après avoir décalé angulairement la bague de synchronisation associée lors d'une phase généralement dite de « dévirage », afin d'être couplé au pignon fou qui a été synchronisé par la bague de synchronisation lors d'une phase généralement dite de « crabotage ». Le couplage d'une bague de synchronisation à un pignon fou est destiné à synchroniser la vitesse de rotation de ce dernier sur celle de l'arbre secondaire qui le porte, et le couplage d'un manchon (ou crabot) à ce même pignon fou est destiné à solidariser temporairement en rotation ce dernier à l'arbre secondaire qui le porte.

Les différentes phases d'un changement de rapport correspondent à différentes positions (longitudinales) de la fourchette associée. L'ensemble de toutes les positions que doivent prendre les différentes fourchettes d'une boîte de vitesses lors des différents changements de rapport est généralement appelé grille de positions. Chaque position d'une grille correspond à un déplacement longitudinal d'une fourchette qui est appris en usine lors d'une phase d'apprentissage, consécutivement à la fabrication de la boîte de vitesses.

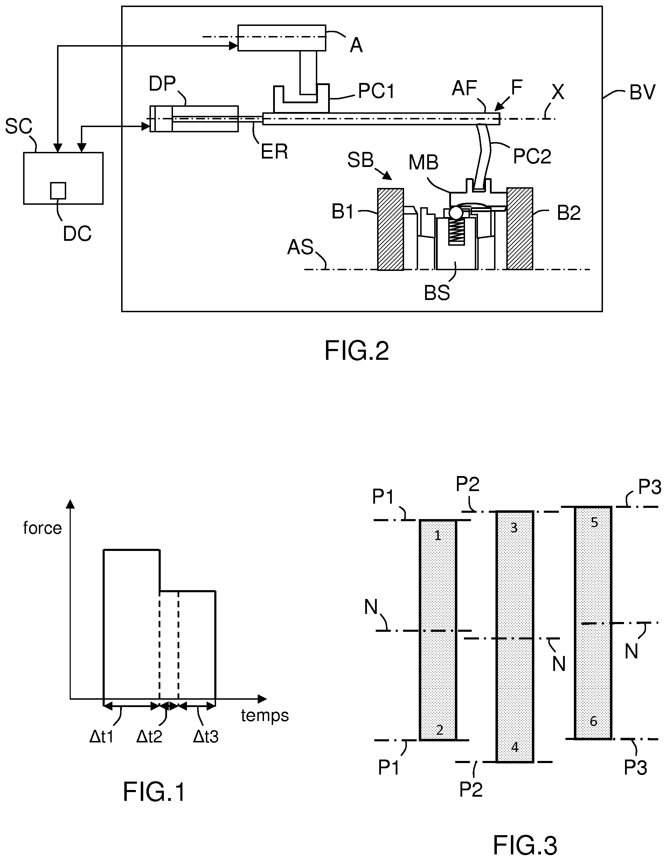

Plus précisément, chaque déplacement (longitudinal) appris d'une fourchette est défini en fonction d'au moins une mesure de position effectuée consécutivement à l'application sur l'actionneur associé à cette fourchette de deux forces prédéfinies destinées à placer le manchon (ou crabot) associé contre une butée. Comme illustré sur la figure 1, ces deux forces prédéfinies peuvent être exercées sur un actionneur pendant un cycle temporel. Ce dernier comprend, par exemple, un premier intervalle de temps Δt1 pendant lequel on exerce sur l'actionneur une force maximale, puis un deuxième intervalle de temps Δt2 pendant lequel on exerce sur l'actionneur une force de maintien, strictement inférieure à la force maximale, pour parvenir à une stabilisation, puis un troisième intervalle de temps Δt3 pendant lequel on continue d'exercer sur l'actionneur la force de maintien afin d'effectuer une mesure de position de la fourchette associée. Ce cycle est généralement réitéré plusieurs fois afin d'effectuer une moyenne avec les différentes mesures de position effectuées. Cette valeur moyenne sert alors à définir le déplacement appris de la fourchette par rapport à une position neutre et pour au moins un changement de rapport associé.

Les différents actionneurs, fourchettes et baladeurs d'une boîte de vitesses étant des pièces mobiles mécaniques, ils font l'objet d'une usure et/ou d'une fatigue qui se tradui(sen)t par des positionnements non optimaux des synchroniseurs et donc par des dysfonctionnements de la boîte de vitesses qui sont détectés par le calculateur de supervision qui contrôle cette dernière.

Ces dysfonctionnements endommageant progressivement certaines pièces de la boîte de vitesses, il faut y remédier le plus vite possible en apportant le système qu'elle équipe (comme par exemple un véhicule) dans un service après-vente (tel qu'un garage), ce qui fait perdre du temps à l'usager de ce système et rend ce dernier inutilisable pendant un certain temps.

L'invention a donc notamment pour but d'améliorer la situation.

Elle propose notamment à cet effet un procédé destiné à permettre le contrôle des déplacements imposés d'au moins une fourchette faisant partie d'une boîte de vitesses robotisée et propre, lorsqu'elle est translatée par un actionneur, à actionner un synchroniseur monté sur un arbre secondaire et associé à des pignons participant à la définition de rapports, chaque déplacement imposé étant défini en fonction d'au moins une mesure effectuée consécutivement à l'application de deux forces prédéfinies sur l'actionneur associé.

Ce procédé se caractérise par le fait qu'il comprend :
- une étape (i) dans laquelle, en cas de détection d'un problème résultant de l'actionnement d'un synchroniseur, on applique les deux forces prédéfinies sur un actionneur, et l'on effectue au moins une autre mesure correspondante pour déterminer un déplacement auxiliaire, puis on détermine une différence entre lesdits déplacements imposé et auxiliaire qui se correspondent, et
- une étape (ii) dans laquelle on associe à chaque fourchette un nouveau déplacement imposé fonction de son déplacement imposé précédent et de la différence déterminée ; et par le fait que
- dans l'étape (ii) on associe à chaque fourchette un nouveau déplacement imposé qui est égal à la somme de son déplacement imposé précédent et d'une partie choisie de la différence déterminée ;
   > la partie choisie varie d'une fourchette à une autre en fonction des rapports auxquels elles sont respectivement associées.

Ainsi dès qu'un problème est détecté on réalise automatiquement un nouvel apprentissage des positions de grille sans que l'usager n'ait à rapporter le système qui comprend la boîte de vitesses dans un service après-vente.

Le procédé selon l'invention peut comporter d'autres caractéristiques qui peuvent être prises séparément ou en combinaison, et notamment :
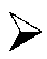 lorsque le problème n'a pas été entièrement résolu pour une fourchette par un nouveau déplacement imposé, on peut associer à cette fourchette un autre nouveau déplacement imposé qui est égal à la somme de son déplacement imposé précédent et d'une autre partie choisie de la différence déterminée, supérieure à la précédente.

L'invention propose également un dispositif destiné à contrôler des déplacements imposés d'au moins une fourchette faisant partie d'une boîte de vitesses robotisée et propre, lorsqu'elle est translatée par un actionneur, à actionner un synchroniseur monté sur un arbre secondaire et associé à des pignons participant à la définition de rapports, chaque déplacement imposé étant défini en fonction d'au moins une mesure effectuée consécutivement à l'application de deux forces prédéfinies sur l'actionneur associé.

Ce dispositif se caractérise par le fait qu'il est agencé, en cas de détection d'un problème résultant de l'actionnement d'un synchroniseur, pour déclencher l'application des deux forces prédéfinies sur un actionneur et la réalisation d'au moins une mesure correspondante afin de déterminer un déplacement auxiliaire, puis pour déterminer une différence entre les déplacements imposé et auxiliaire qui se correspondent, et pour associer à chaque fourchette un nouveau déplacement imposé fonction de son déplacement imposé précédent et de cette différence déterminée, par le fait qu'il est agencé pour associer à chaque fourchette un nouveau déplacement imposé égal à la somme de son déplacement imposé précédent et d'une partie choisie de la différence déterminée et qu'il est agencé pour faire varier la partie choisie d'une fourchette à une autre en fonction des rapports auxquels elles sont respectivement associées.

Le dispositif selon l'invention peut comporter d'autres caractéristiques qui peuvent être prises séparément ou en combinaison, et notamment :
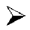 il peut être agencé, lorsque le problème n'a pas été entièrement résolu pour une fourchette par un nouveau déplacement imposé, pour associer à cette fourchette un autre nouveau déplacement imposé égal à la somme de son déplacement imposé précédent et d'une autre partie choisie de la différence déterminée, supérieure à la précédente.

L'invention propose également un véhicule, éventuellement de type automobile, et comprenant une boîte de vitesses robotisée et un dispositif de contrôle du type de celui présenté ci-avant.

D'autres caractéristiques et avantages de l'invention apparaîtront à l'examen de la description détaillée ci-après, et des dessins annexés, sur lesquels :
- la figure 1 illustre schématiquement dans un diagramme un exemple de cycle temporel de forces exercées sur un actionneur pendant une phase d'apprentissage de position de la fourchette associée,
- la figure 2 illustre schématiquement, dans une vue en coupe, une partie d'un exemple de réalisation d'une boîte de vitesses robotisée couplée à un dispositif de contrôle DC selon l'invention, et
- la figure 3 illustre schématiquement dans un diagramme un exemple de déplacements imposés de trois fourchettes différentes associées respectivement à trois paires de pignons (1-2, 3-4 et 5-6).

L'invention a notamment pour but de proposer un procédé de contrôle, et un dispositif de contrôle DC associé, destinés à permettre le contrôle des déplacements imposés d'au moins une fourchette F faisant partie d'une boîte de vitesses BV robotisée et destinée à équiper un système.

Dans ce qui suit, on considère, à titre d'exemple non limitatif, que le système est un véhicule de type automobile, comme par exemple une voiture. Mais l'invention n'est pas limitée à ce type de système. Elle concerne en effet tout type de système comprenant au moins une boîte de vitesses BV robotisée, et notamment les véhicules terrestres (quel qu'en soit le type), les véhicules maritimes (ou fluviaux) et certaines installations, éventuellement industrielles.

On a schématiquement représenté sur la figure 2 une petite partie d'une boîte de vitesses BV robotisée, ici destinée à être couplée à un moteur thermique d'un véhicule via un embrayage.

Bien que cela apparaisse de façon partielle sur la figure 2, la boîte de vitesses BV comprend classiquement et notamment au moins un arbre primaire, au moins un arbre secondaire AS et au moins un actionneur A associé à une fourchette de commande F, elle-même associée à un baladeur B comprenant un manchon (ou crabot) MB et un synchroniseur SB (par exemple à friction).

On considère dans ce qui suit, à titre d'exemple non limitatif, que la boîte de vitesses BV est couplée à un embrayage simple. Par conséquent, elle ne comprend qu'un arbre primaire et un arbre secondaire AS. Mais cette boîte de vitesses BV pourrait être à double embrayage (ou DCT). Le pilotage de cette boîte de vitesses BV est assuré par un calculateur de supervision CS qui contrôle le groupe motopropulseur du véhicule ou bien qui lui est exclusivement dédié.

L'arbre primaire constitue l'entrée de la boîte de vitesses BV. Il est destiné à recevoir le couple moteur via l'embrayage et comprend plusieurs pignons fixes destinés à participer à la définition des rapports (ou vitesses) de la boîte de vitesses BV.

L'arbre secondaire AS constitue la sortie de la boîte de vitesses BV. Il est destiné à recevoir le couple moteur via l'arbre primaire afin de le communiquer à un arbre de transmission auquel il est couplé, et comprend à cet effet plusieurs pignons fous destinés à engrener certains pignons fixes de l'arbre primaire afin de participer à la définition des différents rapports (ou vitesses) de la boîte de vitesses BV.

Cet arbre secondaire AS comprend au moins un synchroniseur SB (et généralement plusieurs (par exemple trois ou quatre)) actionné par une fourchette (de commande) F. Chaque synchroniseur SB est plus précisément solidarisé en rotation à un arbre secondaire AS du fait de l'existence de cannelures longitudinales sur ce dernier (AS), tout en pouvant se translater sur ce dernier (AS) suivant une direction X dite longitudinale pour être couplé à un pignon fou monté à rotation libre sur son arbre secondaire AS, lors d'une phase dite de synchronisation.

Par exemple, chaque synchroniseur SB peut comprendre au moins :
- un moyeu solidarisé en rotation à l'arbre secondaire AS grâce aux cannelures,
- un manchon (ou crabot) MB monté en translation sur le moyeu,
- une bague de synchronisation comprenant une partie conique femelle propre à être couplée à une partie conique mâle d'un pignon fou, et
- un mécanisme d'armement installé entre une face interne du manchon MB et une face externe du moyeu, et destiné à translater la bague de synchronisation pour la coupler au pignon fou lorsque le manchon (ou crabot) MB est translaté par la fourchette F associée.

Chaque manchon (ou crabot) MB est propre à être translaté suivant la direction longitudinale X, après avoir décalé angulairement la bague de synchronisation associée lors d'une phase généralement dite de « dévirage », afin d'être couplé au pignon fou qui a été synchronisé par la bague de synchronisation lors d'une phase généralement dite de « crabotage ». Le couplage d'une bague de synchronisation à un pignon fou est destiné à synchroniser la vitesse de rotation de ce dernier sur celle de l'arbre secondaire AS qui le porte, et le couplage d'un manchon (ou crabot) MB à ce même pignon fou est destiné à solidariser temporairement en rotation ce dernier à l'arbre secondaire AS qui le porte.

Par exemple, la boîte de vitesses BV peut comprendre six rapports de marche avant, et trois actionneurs A associés respectivement à trois fourchettes F qui sont elles-mêmes associées respectivement à trois baladeurs B. La première fourchette est par exemple dédiée aux premier et deuxième rapports, la deuxième fourchette est par exemple dédiée aux troisième et quatrième rapports, et la troisième fourchette est par exemple dédiée aux cinquième et sixième rapports. Mais la boîte de vitesses BV pourrait comprendre plus de trois fourchettes F ou bien moins de trois fourchettes F.

Les différentes phases de chaque changement de rapport correspondent à différentes positions longitudinales de la fourchette F associée qui ont été apprises en usine lors d'une phase d'apprentissage, consécutivement à la fabrication de la boîte de vitesses BV (et donc qui sont ensuite imposées par le calculateur de supervision CS). L'ensemble de toutes les positions apprises de toutes les fourchettes F de la boîte de vitesses BV lors des différents changements de rapport est appelé grille de positions. Chaque position de la grille correspond à un déplacement longitudinal (c'est-à-dire suivant la direction longitudinale X) d'une fourchette F qui est mesuré par rapport à une position appelée neutre N par un détecteur de position DP implanté dans la boîte de vitesses BV et associé à une extrémité arrière ER de cette fourchette F.

Chaque déplacement longitudinal appris (puis imposé) da1 est défini en fonction d'au moins une mesure de position effectuée consécutivement à l'application sur l'actionneur A qui est associé à une fourchette F de deux forces prédéfinies destinées à placer le manchon (ou crabot) MB associé à cette fourchette F contre une butée B1 ou B2. La butée B1 est une butée arrière qui est par exemple associée à un rapport impair, tandis que la butée B2 est une butée avant qui est par exemple associée à un rapport pair.

Ces deux forces prédéfinies peuvent être exercées sur un actionneur A pendant un cycle temporel du type de celui illustré sur la figure 1. Ce cycle temporel comprend, par exemple, un premier intervalle de temps Δt1 pendant lequel on exerce sur l'actionneur A une force maximale, puis un deuxième intervalle de temps Δt2 pendant lequel on exerce sur cet actionneur A une force de maintien, strictement inférieure à la force maximale, pour parvenir à une stabilisation, puis un troisième intervalle de temps Δt3 pendant lequel on continue d'exercer sur cet actionneur A la force de maintien afin d'effectuer une mesure de position de la fourchette F associée au moyen du détecteur de position DP. Par exemple, la force maximale est égale à environ 800 N, tandis que le force de maintien est égale à environ 600 N.

Le cycle temporel est de préférence réitéré N fois (avec N ≥ 3) afin d'obtenir une valeur moyenne avec les N mesures de position effectuées. Cette valeur moyenne sert alors à définir le déplacement appris da1 de la fourchette F par rapport à une position neutre N et pour au moins un changement de rapport associé. On notera que parmi les N mesures de position effectuées, N/2 peuvent être ici réalisées sur le rapport impair et N/2 sur le rapport pair. On notera également que pendant chaque troisième intervalle de temps Δt3 d'un cycle temporel il est avantageux d'effectuer plusieurs mesures de position afin d'en déduire une mesure moyenne. Dans ce cas, la valeur moyenne finale après N cycles temporels est égale à la moyenne des N mesures moyennes obtenues respectivement lors des N cycles temporels.

Un exemple de grille de positions apprise pour une boîte de vitesses BV à six rapports est illustré non limitativement sur la figure 3. On considère dans cet exemple que le déplacement de la fourchette F associée à un rapport impair (1, 3 ou 5) par rapport à sa position neutre N est identique au déplacement de cette même fourchette F également associée à un rapport pair (2, 4 ou 6) par rapport à cette même position neutre N. Par conséquent, une position neutre est ici placée au milieu des deux positions opposées matérialisant les deux déplacements de la fourchette F respectivement pour les rapports impair et pair associés. Mais cela n'est pas obligatoire. Par ailleurs, les positions neutres N des trois fourchettes F ne sont pas ici identiques du fait qu'elles ne sont pas alignées sur une même droite, mais elles pourraient l'être.

Comme indiqué précédemment, l'invention a notamment pour but de proposer un procédé destiné à permettre le contrôle des déplacements qui sont imposés au(x) fourchette(s) F de la boîte de vitesses BV décrite ci-avant.

Un tel procédé de contrôle comprend des première (i) et seconde (ii) étapes qui peuvent être mises en oeuvre par un dispositif de contrôle DC. Ce dernier (DC) peut, par exemple, faire partie du calculateur de supervision CS qui contrôle le groupe motopropulseur du véhicule ou bien qui lui est exclusivement dédié. Mais dans une variante de réalisation, il pourrait se présenter sous la forme d'un équipement éventuellement couplé au calculateur de supervision CS précité. Par conséquent, ce dispositif de contrôle DC peut être réalisé sous la forme de modules logiciels (ou informatiques ou encore « software »), ou bien d'une combinaison de circuits électroniques (ou « hardware ») et de modules logiciels.

Une première étape (i), du procédé selon l'invention, est déclenchée (par le dispositif de contrôle DC) chaque fois qu'un problème (ou dysfonctionnement) résultant de l'actionnement d'un synchroniseur SB a été détecté (par exemple par le calculateur de supervision CS). Un tel dysfonctionnement résulte d'une usure et/ou d'une fatigue des actionneurs A et/ou des fourchettes F et/ou des baladeurs B. On notera que chaque fourchette F comprend un axe AF comportant une partie arrière munie d'une première pièce de couplage PC1 couplée à un doigt de l'actionneur A, et une partie avant munie d'une seconde pièce de couplage PC2 sensiblement transversale et couplée au manchon (ou crabot) MB. Cette seconde pièce de couplage PC2 présente une flexibilité qui peut varier dans le temps par fatigue, et donc peut progressivement empêcher que le manchon (ou crabot) MB atteigne une butée B1 ou B2.

Cette première étape (i) consiste tout d'abord à effectuer un nouvel apprentissage des positions d'au moins une fourchette F en appliquant (ou exerçant) les deux forces prédéfinies (décrites plus haut) sur un actionneur A (de préférence celui qui est ici associé à la fourchette F commandant les premier et deuxième rapports), et en effectuant au moins une autre mesure correspondante pour déterminer un déplacement (longitudinal) auxiliaire da2 de cette fourchette F.

Ces deux forces prédéfinies peuvent être exercées sur l'actionneur A prédéfini pendant un cycle temporel identique à celui illustré sur la figure 1. Par ailleurs, comme dans le cas de l'apprentissage initial (en usine), ce cycle temporel est de préférence réitéré N fois (avec N ≥ 3) afin d'obtenir une valeur moyenne servant à définir le déplacement auxiliaire da2 de la fourchette F par rapport à une position neutre N. On notera également que pendant chaque troisième intervalle de temps Δt3 d'un cycle temporel il est avantageux d'effectuer plusieurs mesures de position afin d'en déduire une mesure moyenne. Dans ce cas, la valeur moyenne finale après N cycles temporels est égale à la moyenne des N mesures moyennes obtenues respectivement lors des N cycles temporels.

Cette première étape (i) consiste ensuite à déterminer une différence dif entre le déplacement imposé (ou appris) da1 et le déplacement auxiliaire da2 qui se correspondent (soit dif = da1 - da2).

Une seconde étape (ii), du procédé selon l'invention, consiste à associer (dans le dispositif de contrôle DC) à chaque fourchette F un nouveau déplacement imposé da1' qui est fonction de son déplacement imposé précédent da1 et de la différence dif qui a été déterminée lors de la première étape (i).

Grâce à l'invention, lorsqu'un problème, par exemple de synchronisation ou de mise en butée, est détecté par le calculateur de supervision CS pendant le déplacement du manchon MB, le dispositif de contrôle DC déclenche automatiquement la réalisation d'un nouvel apprentissage des positions de grille sans que l'usager n'ait à intervenir. On notera que ce nouvel apprentissage est sensiblement réalisé dans les mêmes conditions de fonctionnement que celles présentes lors de l'apprentissage initial en usine (et notamment température similaire dans la boîte de vitesses BV, vitesse de rotation similaire de la boîte de vitesses BV et couple similaire en entrée de la boîte de vitesses BV). Puis, les résultats de ce nouvel apprentissage sont utilisés pour déterminer de nouveaux déplacements imposés da1' qui remplacent les précédents (da1) et définissent une nouvelle grille modifiée qui va être utilisée par le calculateur de supervision CS à la place de la précédente grille. Par conséquent, l'usager du véhicule n'a pas besoin de rapporter ce dernier dans un garage, ce qui évite de lui faire perdre du temps, d'immobiliser son véhicule et une aggravation de la situation dans la boîte de vitesses BV.

Lorsque l'on ne détermine qu'une seule différence dif pour une fourchette F (par exemple celles qui est associée aux premier et deuxième rapports), on (le dispositif de contrôle DC) peut par exemple, dans la seconde étape (ii), associer à chaque fourchette F un nouveau déplacement imposé da1' qui est égal à la somme de son déplacement imposé précédent da1 et d'une partie choisie de la seule différence déterminée dif (soit da1' = da1 + f(dif)).

Par exemple, cette partie choisie f(dif) peut être égale à la moitié de la différence déterminée dif pour la fourchette F considérée (soit f(dif) = dif/2).

Dans une variante de réalisation, la partie choisie f(dif) peut varier d'une fourchette F à une autre en fonction des rapports auxquels elles sont respectivement associées. Par exemple, elle peut décroitre lorsque les rapports deviennent plus élevés du fait que les rapports élevés sont généralement moins sollicités que les rapports inférieurs. Les rapports les moins sollicités peuvent être déterminés par un profil de mission et/ou étude de l'utilisation de la boîte de vitesses BV sur un panel d'utilisateurs du véhicule considéré.

Mais, on pourrait envisager que l'on détermine une différence dif pour chaque fourchette F. Dans ce cas, le nouveau déplacement imposé da1' d'une fourchette F est égal à la somme du déplacement imposé précédent da1 de cette fourchette F et d'une partie choisie de la différence dif déterminée pour cette fourchette F.

On notera que, lorsque le problème (ou dysfonctionnement) n'a pas été entièrement résolu pour une fourchette F par l'utilisation d'un nouveau déplacement imposé da1', il est particulièrement avantageux que l'on (le dispositif de contrôle DC) associe à cette fourchette F un autre nouveau déplacement imposé da1" égal à la somme de son déplacement imposé précédent da1 et d'une autre partie choisie f'(dif) de la différence déterminée dif, supérieure à la précédente f(dif) (soit da1" = da1 + f'(dif)). Cette option permet en effet de modifier progressivement les déplacements imposés des différentes fourchettes, en les augmentant si besoin est pour chaque fourchette F concernée, plutôt que d'imposer à chaque fourchette F une modification maximale qui risquerait d'être trop importante pour l'une au moins d'entre elles.

## Revendications

1. Procédé de contrôle des déplacements imposés d'au moins une fourchette (F) faisant partie d'une boîte de vitesses (BV) robotisée et propre, lorsqu'elle est translatée par un actionneur (A), à actionner un synchroniseur (SB) monté sur un arbre secondaire (AS) et associé à des pignons participant à la définition de rapports, chaque déplacement imposé étant défini en fonction d'au moins une mesure effectuée consécutivement à l'application de deux forces prédéfinies sur ledit actionneur (A), **caractérisé en ce qu'**il comprend une étape (i) dans laquelle, en cas de détection d'un problème résultant de l'actionnement d'un synchroniseur (SB), on applique lesdites deux forces prédéfinies sur ledit actionneur (A) et l'on effectue au moins une autre mesure correspondante pour déterminer un déplacement auxiliaire, puis on détermine une différence entre lesdits déplacements imposé et auxiliaire qui se correspondent, et une étape (ii) dans laquelle on associe à chaque fourchette (F) un nouveau déplacement imposé fonction de son déplacement imposé précédent et de ladite différence déterminée, **en ce que** dans ladite étape (ii) on associe à chaque fourchette (F) un nouveau déplacement imposé égal à la somme de son déplacement imposé précédent et d'une partie choisie de ladite différence déterminée et **en ce que** ladite partie choisie varie d'une fourchette (F) à une autre en fonction des rapports auxquels elles sont respectivement associées.

2. Procédé selon la revendication 1, **caractérisé en ce que**, lorsque ledit problème n'a pas été entièrement résolu pour une fourchette (F) par un nouveau déplacement imposé, on associe à cette fourchette (F) un autre nouveau déplacement imposé égal à la somme de son déplacement imposé précédent et d'une autre partie choisie de ladite différence déterminée, supérieure à la précédente.

3. Dispositif (DC) de contrôle des déplacements imposés d'au moins une fourchette (F) faisant partie d'une boîte de vitesses (BV) robotisée et propre, lorsqu'elle est translatée par un actionneur (A), à actionner un synchroniseur (SB) monté sur un arbre secondaire (AS) et associé à des pignons participant à la définition de rapports, chaque déplacement imposé étant défini en fonction d'au moins une mesure effectuée consécutivement à l'application de deux forces prédéfinies sur ledit actionneur (A), **caractérisé en ce qu'**il est agencé, en cas de détection d'un problème résultant de l'actionnement d'un synchroniseur (SB), pour déclencher l'application desdites deux forces prédéfinies sur ledit actionneur (A) et la réalisation d'au moins une mesure correspondante afin de déterminer un déplacement auxiliaire, puis pour déterminer une différence entre lesdits déplacements imposé et auxiliaire qui se correspondent, et pour associer à chaque fourchette (F) un nouveau déplacement imposé fonction de son déplacement imposé précédent et de ladite différence déterminée, **en ce qu'**il est agencé pour associer à chaque fourchette (F) un nouveau déplacement imposé égal à la somme de son déplacement imposé précédent et d'une partie choisie de ladite différence déterminée et **en ce qu'**il est agencé pour faire varier ladite partie choisie d'une fourchette (F) à une autre en fonction des rapports auxquels elles sont respectivement associées.

4. Dispositif selon la revendication 3, **caractérisé en ce qu'**il est agencé, lorsque ledit problème n'a pas été entièrement résolu pour une fourchette (F) par un nouveau déplacement imposé, pour associer à cette fourchette (F) un autre nouveau déplacement imposé égal à la somme de son déplacement imposé précédent et d'une autre partie choisie de ladite différence déterminée, supérieure à la précédente.

5. Véhicule, **caractérisé en ce qu'**il comprend une boîte de vitesse robotisée (BV) et un dispositif de contrôle (DC) selon l'une des revendications 3 et 4.

6. Véhicule selon la revendication 5, **caractérisé en ce qu'**il est de type automobile.

## Patentansprüche

1. Verfahren zum Steuern der auferlegten Bewegungen mindestens einer Gabel (F), die Teil eines automatisierten Schaltgetriebes (BV) ist und geeignet ist, wenn sie von einem Aktuator (A) verschoben wird, eine Synchronisierungskupplungsnabe (SB), die auf einer Hilfswelle (AS) montiert und mit Ritzeln assoziiert ist, die an der Definition von Gängen teilnehmen, zu betätigen, wobei jede auferlegte Bewegung in Abhängigkeit von mindestens einer Messung definiert wird, die im Anschluss an das Anlegen von zwei vordefinierten Kräften auf den Aktuator (A) ausgeführt wird, **dadurch gekennzeichnet, dass** es einen Schritt (i) umfasst, bei dem man, im Fall eines Erfassens eines Problems, das aus dem Betätigen einer Synchronisierungskupplungsnabe (SB) resultiert, die zwei vordefinierten Kräfte auf den Aktuator (A) anlegt und mindestens eine andere entsprechende Messung ausführt, um eine Hilfsbewegung zu bestimmen, man dann einen Unterschied zwischen der auferlegten und der Hilfsbewegung, die einander entsprechen, bestimmt, und einen Schritt (ii), bei dem man mit jeder Gabel (F) eine neue auferlegte Bewegung in Abhängigkeit von ihrer vorhergehenden auferlegten Bewegung und dem bestimmten Unterschied assoziiert, dass man bei dem Schritt (ii) mit jeder Gabel (F) eine neue auferlegte Bewegung gleich der Summe ihrer vorhergehenden auferlegten Bewegung und einem ausgewählten Teil des bestimmten Unterschieds assoziiert, und dass der ausgewählte Teil von einer Gabel (F) zu einer anderen in Abhängigkeit von Gängen, mit welchen sie jeweils assoziiert sind, variiert.

2. Verfahren nach Anspruch 1, **dadurch gekennzeichnet, dass**, wenn das Problem für eine Gabel (F) durch eine neue auferlegte Bewegung nicht vollständig gelöst wurde, man diese Gabel (F) mit einer anderen neuen auferlegten Bewegung assoziiert, die gleich der Summe ihrer vorhergehenden auferlegten Bewegung und einem anderen Teil, der aus dem bestimmten Unterschied ausgewählt wird, der größer ist als der vorhergehende, ist.

3. Vorrichtung (DC) zum Steuern der auferlegten Bewegungen mindestens einer Gabel (F), die Teil eines automatisierten Schaltgetriebes (BV) ist und geeignet ist, um, wenn sie von einem Aktuator (A) verschoben wird, eine Synchronisierungskupplungsnabe (SB) zu betätigen, die auf einer Hilfswelle (AS) montiert und mit Ritzeln assoziiert ist, die an der Definition von Gängen teilnehmen, wobei jede auferlegte Bewegung in Abhängigkeit von mindestens einer Messung, die im Anschluss an das Anlegen von zwei vorbestimmten Kräften auf den Aktuator (A) ausgeführt wird, definiert wird, **dadurch gekennzeichnet, dass** sie eingerichtet ist, um im Fall eines Erfassens eines Problems, das aus dem Betätigen einer Synchronisierungskupplungsnabe (SB) resultiert, das Anlegen der zwei vorbestimmten Kräfte auf den Aktuator (A) und die Ausführung mindestens einer entsprechenden Messung auszulösen, um eine Hilfsbewegung zu bestimmen, um dann einen Unterschied zwischen der auferlegten Bewegung und der Hilfsbewegung, die einander entsprechen, zu bestimmen, und um mit jeder Gabel (F) eine neue auferlegte Bewegung zu assoziieren, die von ihrer vorhergehenden auferlegten Bewegung und dem bestimmten Unterschied abhängt, dass sie eingerichtet ist, um mit jeder Gabel (F) eine neue auferlegte Bewegung zu assoziieren, die gleich der Summe ihrer vorhergehenden auferlegten Bewegung und einem Teil ist, der aus dem bestimmten Unterschied ausgewählt ist, und dass sie eingerichtet ist, um den ausgewählten Teil einer Gabel (F) mit einer anderen in Abhängigkeit von den Gängen, mit welchen sie jeweils assoziiert sind, variieren zu lassen.

4. Vorrichtung nach Anspruch 3, **dadurch gekennzeichnet, dass** sie eingerichtet ist, um, wenn das Problem für eine Gabel (F) durch eine neue auferlegte Bewegung nicht vollständig gelöst wurde, mit dieser Gabel (F) eine andere neue auferlegt Bewegung, die gleich der Summe ihrer vorhergehenden auferlegten Bewegung und einem anderen Teil, der aus dem bestimmten Unterschied ausgewählt ist, der größer ist als der vorhergehende, zu assoziieren.

5. Fahrzeug **dadurch gekennzeichnet, dass** es ein automatisiertes Schaltgetriebe (BV) und eine Steuervorrichtung (DC) nach einem der Ansprüche 3 und 4 umfasst.

6. Fahrzeug nach Anspruch 5, **dadurch gekennzeichnet, dass** es vom Typ Kraftfahrzeug ist.

## Claims

1. A method for monitoring the movements imposed on at least one fork (F) forming part of a robotized gearbox (BV) and able, when it is translated by an actuator (A), to actuate a synchronizer (SB) mounted on a secondary shaft (AS) and associated with pinions contributing to the defining of gear ratios, each imposed movement being defined as a function of at least one measurement taken following the application of two predefined forces to said actuator (A), **characterized in that** it includes a step (i) in which, in the event of detection of a problem resulting from the actuation of a synchronizer (SB), said two predefined forces are applied on said actuator (A) and at least one other corresponding measurement is taken in order to determine an auxiliary movement, then a difference is determined between said imposed and auxiliary movements which correspond to one another, and a step (ii) in which there is associated with each fork (F) a new imposed movement as a function of its previous imposed movement and of said determined difference, **in that** in said step (ii) there is associated with each fork (F) a new imposed movement equal to the sum of its previous imposed movement and a selected part of said determined difference and **in that** said selected part varies from one fork (F) to another as a function of the gear ratios with which they are respectively associated.

2. The method according to Claim 1, **characterized in that**, when said problem has not been entirely resolved for a fork (F) by a new imposed movement, there is associated with this fork (F) another new imposed movement equal to the sum of its previous imposed movement and of another selected part of said determined difference, greater than the preceding one.

3. A device (DC) for monitoring the movements imposed on at least one fork (F) forming part of a robotized gearbox (BV) and able, when it is translated by an actuator (A), to actuate a synchronizer (SB) mounted on a secondary shaft (AS) and associated with pinions contributing to the defining of gear ratios, each imposed movement being defined as a function of at least one measurement taken following the application of two predefined forces on said actuator (A), **characterized in that** it is arranged, in the event of detection of a problem resulting from the actuation of a synchronizer (SB), to trigger the application of said two predefined forces on said actuator (A) and the taking of at least one corresponding measurement in order to determine an auxiliary movement, then to determine a difference between said imposed and auxiliary movements which correspond to one another, and to associate with each fork (F) a new imposed movement as a function of its previous imposed movement and of said determined difference, **in that** it is arranged to associate with each fork (F) a new imposed movement equal to the sum of its previous imposed movement and a selected part of said determined difference, and **in that** it is arranged to vary said selected part from one fork (F) to another, as a function of the gear ratios with which they are respectively associated.

4. The device according to Claim 3, **characterized in that** it is arranged, when said problem has not been entirely resolved for a fork (F) by a new imposed movement, to associate with this fork (F) another new imposed movement equal to the sum of its previous imposed movement and of another selected part of said determined difference, greater than the preceding one.

5. A vehicle, **characterized in that** it includes a robotized gearbox (BV) and a monitoring device (DC) according to one of Claims 3 and 4.

6. The vehicle according to Claim 5, **characterized in that** it is of motor vehicle type.
